# EUROPÄISCHE PATENTSCHRIFT

(11) **EP 0 414 947 B1**
(45) Veröffentlichungstag und Bekanntmachung des Hinweises auf die Patenterteilung: **19.10.1994**
(21) Anmeldenummer: 89116121.8
(22) Anmeldetag: 31.08.1989
(51) Int. Cl.: H02P 1/02

(54) **Schalter mit funkengeschützter Lastumschaltung**
Spark protected on-load tap changing switch
Interrupteur protégé contre les étincelles pour la commutation en charge

(43) Veröffentlichungstag der Anmeldung: 06.03.1991
(73) Patentinhaber: SIEMENS AKTIENGESELLSCHAFT, 80333 München (DE)
(72) Erfinder: Schramm, Michael, Dipl.-Ing.(FH), D-8632 Neustadt (DE)

(56) Entgegenhaltungen:
- DE-C- 114 234
- DE-C- 380 051
- DE-C- 1 049 471

## Beschreibung

Die Erfindung bezieht sich auf einen Schalter mit funkengeschützter Lastumschaltung gemäß Oberbegriff des Anspruchs 1; ein derartiger Schalter ist aus der DE-PS-114 234 bekannt.

Bei der bekannten Vorrichtung zur Verhütung der Funkenbildung bei Anlaß- und anderen regelbaren, über Anzapfungen ein- oder auszuschaltenden Widerständen im Ankerstromkreis eines Elektromotors sind die Wicklungsanschlüsse des Elektromotors an durchgehende kreisbogenförmige Kontaktschienen und die Widerstandsanzapfungen an dazu konzentrisch angeordnete einzelne Kontaktpunkte angeschlossen. Zum Umschalten dient ein Kontaktbürstenarm, der einerseits auf den mit den Wicklungsanschlüssen versehenen Kontaktschienen gleitet und andererseits je nach Stellung einen der mit den Widerstandsanzapfungen versehenen Kontakte berührt. Zur Verhütung der Funkenbildung an diesen Kontakten ist eine durch die rotatorische Bewegung des Kontaktbürstenarmes zwangsläufig sich öffnende oder schließende Unterbrechnungsvorrichtung mit einem Kohleausschalter und einem magnetischen Funkenausbläser derart vorgesehen, daß eine zum Kontaktbürstenarm gesonderte, und mit der Unterbrechungsstelle verbundene Hilfsbürste mit dem Kontaktbürstenarm bewegt wird und beim Einschalten das vorliegende Stromschlußstück berührt ehe sich der Kohleausschalter geschlossen hat und beim Ausschalten das hinter ihr liegende Stromschlußstück erst verläßt, nachdem der Kohleausschalter sich geöffnet hat.

Ein demgegenüber konstruktiv und fertigungstechnisch wesentlich einfacherer und trotzdem die betriebsmäßig den Motorstrom führenden Kontakte vor einem Funkenabbrand schützender Schalter der eingangs genannten Art kann nach der Erfindung durch die Lehre gemäß Anspruch 1 erreicht werden. Bei dieser Konstruktion kann unter Verzicht auf gesonderte Hilfsbürsten und Unterbrechungsschalter gewährleistet werden, daß die Betriebskontaktbahnen immer nahezu potentialfrei umgeschaltet, somit keinem Lichtbogenabbrand ausgesetzt und während jeder Schaltbewegung die Schaltkontaktbahnen durch die Beschleifung mit dem Kontaktbürstenarm zwangsläufig einer gewissen Reinigung von eventuell beim vorhergehenden Umschalten entstandenen Abbrandrückständen zwangsläufig unterzogen werden.

Eine weitere konstruktive und fertigungstechnische Vereinfachung ist durch einen um einen Schalterdrehpunkt rotatorisch bewegbaren Kontaktbürstenarm und je unterbrechbarer Kontaktstelle zumindest eine von diesem beschliffene kreisbogenförmige Schaltkontaktbahn und dazu konzentrische Betriebskontaktbahn deren Kreisbogenlänge zumindest um die Kontaktbreite des Kontaktbürstenarms kürzer ist als die Kreisbogenlänge der entsprechenden Schaltkontaktbahn gekennzeichnet, wobei zweckmäßigerweise jeweils je Kontaktbahnsegment je eine Betriebskontaktbahn und je eine Schaltkontaktbahn einstückig zu einer Bauteileinheit zusammengefaßt sind. Nach einer Ausgestaltung der Erfindung bestehen die derartigen Kontaktbahnsegmente aus einstückigen Stanzbiegeteilen mit zur Rückseite des Schalters abgebogenen Anschlußfahnen, die als Anschlußstecker für eine Kontaktbuchse, insbesondere eines handelsüblichen Steckers für eine äußere Anschlußleitung ausgebildet bzw. angeordnet und gegebenenfalls gleichzeitig als Fixiermittel, z.B. mit Hilfe von eingeformten Rastlappen, zur Halterung der Kontaktbahnen auf dem ruhenden Teil des Schalters mitbenutzt sind.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1-5: anhand einer Prinzipdarstellung der Kontaktvorrichtung eines erfindungsgemäßen Schalters fünf verschiedene gegenseitige Zuordnungen der Kontaktbürstenanordnung im Verhältnis zu den Kontaktbahnen,
- FIG 6: in stirnseitiger vereinfachter Draufsicht einen Schalter mit drei zur Umschaltung zwischen verschiedenen Wicklungsteilen einer Motorwicklung vorgesehenen Kontaktbahnsegmenten und mit einem diese Kontaktbahnsegmente mit einer unterbrechungsfreien Dauer-Kontaktbahn verbindenden Kontaktbürstenarm,
- FIG 7: den Schalter gemäß FIG 6 im Schnittverlauf VII-VII.

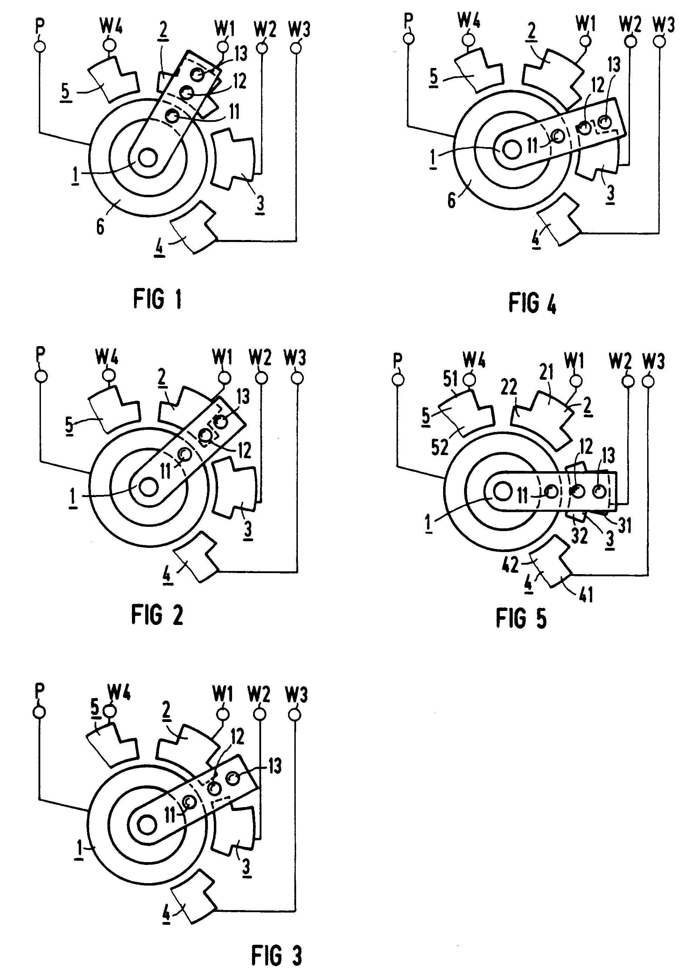

FIG 1-5 zeigen einen Schalter mit vier Kontaktbahnsegmenten 2,3,4,5, die mit verschiedenen Wicklungsanzapfungen W1,W2,W3,W4 einer hier nicht dargestellten gleichstromgespeisten Ankerwicklung eines Elektromotors verbunden sind. Der Anschluß der Kontaktbahnsegmente 2,3,4,5 an den einen Pol P der speisenden Gleichstromspannungsquelle erfolgt über einen Kontaktbürstenarm 1 und eine zu den Kontaktbahnsegmenten 2,3,4,5 konzentrische und unterbrechungsfreie Dauer-Betriebskontaktbahn 6.

Jedes Kontaktbahnsegment 2,3,4,5 ist aufgeteilt in eine Betriebskontaktbahn 21,31,41,51 und eine dazu konzentrische einstückig verbundene Schaltkontaktbahn 22,32,42,52. Die Kontaktierung zwischen dem Kontaktbürstenarm 1 und der Dauer-Betriebskontaktbahn 6 bzw. der jeweiligen Schaltkontaktbahn 22,32,42,52 und der jeweiligen Betriebskontaktbahn 21,31,41,51 erfolgt im Bereich von Kontaktpunkten 11 bzw.12 bzw.13 des Kontaktbürstenarmes 1. Die Betriebskontaktbahnen 21,31,41,51 der einzelnen in Abstand zueinander am Umfang hintereinander angeordneten Kontaktbahnsegmente 2,3,4,5 weisen je Kontaktbahnsegment gegenüber der Kreisbogenlänge der jeweiligen Schaltkontaktbahnen 22,32,42,52 eine um zumindest die Kontaktbreite des Schleifbürstenarmes 1 verminderte Kreisbogenlänge derart auf, daß der Kontaktbürsten arm 1 schon vollständig von der jeweiligen Betriebskontaktbahn abgehoben hat bzw. nocht nicht kontaktiert hat, wenn er die Schaltkontaktbahn des entsprechenden Kontaktbahnsegmentes erst verläßt oder schon berührt.

Aufgrund der zuvor beschriebenen erfindungsgemäßen Anordnung der Betriebkontaktbahnen und der Schaltkontaktbahnen relativ zur Kontaktbürstenanordnung ergeben sich die folgenden anhand von FIG 1-5 erläuterten Schaltzustände:

Gemäß FIG 1 verbindet der Kontaktbürstenarm 1 über seine Kontakte 11,12,13 den Pol P der speisenden Gleichstromquelle über die Dauer-Betriebskontaktbahn 6 sowohl die Hilfskontaktbahn 21 als auch die Schaltkontaktbahn 22 des Kontaktbahnsegmentes 2. Gemäß FIG 2 hat der Kontakt 13 des Kontaktbürstenarmes 1 die Betriebskontaktbahn 21 verlassen, während die elektrische Verbindung zur Wicklungsanzapfung W1 über den Kontakt 12 des Kontaktbürstenarmes 1 und die Schaltkontaktbahn 22 aufrechterhalten wird. Beim Verlassen des Kontaktes 13 von der Betriebskontaktbahn 21 tritt kein Lichtbogen auf, da der Strom noch über die Schaltkontaktbahn 22 geführt wird und der Kontakt 13 somit praktisch keinen Potentialunterschied gegenüber dem Kontaktbahnsegment 2 aufweist. Gemäß FIG 3 ist nunmehr die Verbindung zwischen dem Pol P der Speisespannungsquelle und der Wicklungsanzapfung W1 der Motorwicklung voll unterbrochen, da der Kontakt 12 des Kontaktbürstenarms 1 unter Inkaufnahme eines gewissen Abbrandes gegenüber der Schaltkontaktbahn 22 das Kontaktbahnsegment 2 vollständig verlassen hat.

Gemäß FIG 4 wird nunmehr über den Kontakt 12 des Kontaktbürstenarms 1 die zweite Wicklungsanzapfung W2 der Motorwicklung mit Strom versorgt, wobei wiederum zwischen dem Kontakt 12 und der Schaltkontaktbahn 32 des Kontaktbahnsegementes 3 ein gewisser Abbrand auftreten kann, jedoch bei der Kontaktierung zwischen der Betriebskontaktbahn 31 des Kontaktsegmentes 3 und dem Kontakt 13 des Kontaktbürstenarmes 1 gemäß FIG 5 eine Kontaktgabe ohne Potentialunterschied und somit lichtbogenfrei gewährleistet ist.

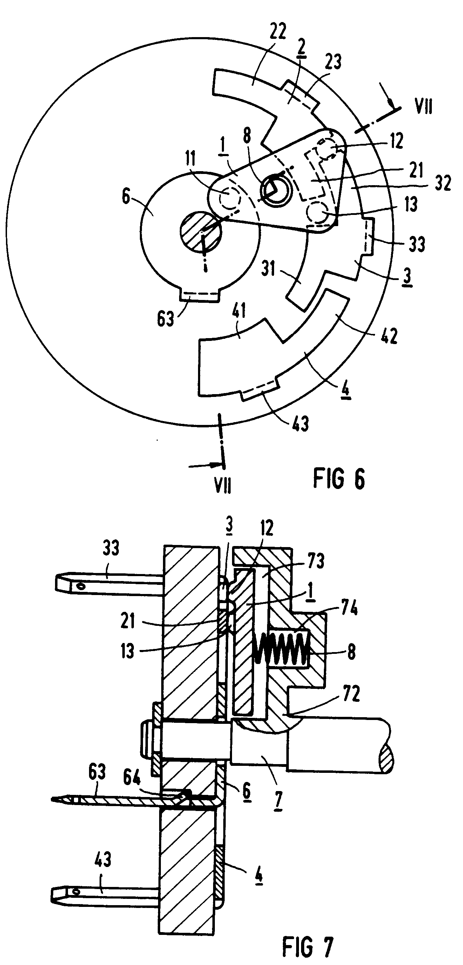

FIG 6,7 zeigen eine vorteilhafte konstruktive Ausführung eines erfindungsgemäßen Schalters, mit drei Kontaktbahnsegmeten 2,3,4 und einer Dauerbetriebskontaktbahn 6 sowie einem das jeweilige Kontaktbahnsegmente 2 bzw.3 bzw.4 mit der Dauerbetriebskontaktbahn 6 elektrisch verbindenden Kontaktbürstenarm 1, dessen Kontakte 11,12,13 nicht wie in FIG 1-5 radial fluchtend, sondern in Dreieck angeordnet sind, wodurch sich eine höhere Betriebssicherheit mit in jedem Fall gewährleisteter Kontaktgabe zwischen den Kontakten des Kontaktbürstenarms einerseits und den Kontaktbahnen andererseits diese Kontaktgabe sind verstärkt durch eine Andruckfeder 8, die in konstruktiv besonders einfacher Weise in eine Tasche 74 des drehbaren Teils 72 des erfindungsgemäßen Schalters 7 eingesteckt ist, die mit ihrem freien Ende den ebenfalls in eine Tasche 73 des drehbaren Teils 72 des Schalters 7 isoliert eingelegten Kontaktbürstenarm 1 mit seinen Kontakten 11,12,13 gegen die Kontaktbahnen andrückt.

Die Umschaltung zwischen den Kontakten 12 des Kontaktbürstenarms 1 und den jeweiligen Schaltkontaktbahnen zweier aufeinanderfolgender Kontaktsegmente 22 bzw.32 bzw.42 bzw.52 kann entweder gemäß FIG 1-5 "unterbrechend schaltend" bzw. gemäß FIG 6 "verbindend schaltend" erfolgen.

Nach einer vorteilhaften Ausgestaltung der Erfindung sind die Kontaktbahnsegmente 2,3,4 als einstückige Biegestanzteile mit zur Rückseite des Schalters 7 abgebogenen Anschlußfahnen 23,33, 63 ausgebildet und derart angeordnet, daß eine die Wicklungsenden W1-W4 und den einen Anschluß P der Speisespannungsquelle enthaltende, hier nicht dargestellte, äußere Anschlußleitung über eine handelsübliche Steckbuchse kontaktierbar sind. Die Anschlußfahnen der Kontaktbahnsegmente 2,3,4,5 werden in vorteilhafter Weise gleichzeitig zur Fixierung der einstückigen Biegestanzteile in der ruhenden Grundplatte 71 des Schalters 7 mitbenutzt, wozu gemäß dem in FIG 7 dargestellten Ausführungsbeispiels - wie anhand der Anschlußfahne 63 gezeigt - Rastlappen 64 in die Anschlußfahnen eingestanzt und abgebogen sind; die Rastlappen schnappen beim Durchstecken der Anschlußbahnen durch entsprechende Durchführungen in der Grundplatte 71 hinter korrespondierende Hinterschneidungen ein und fixieren somit die mit ihren Kontaktbahnen auf der Oberfläche der Grundplatte aufliegenden einstückigen Biegestanzteile in Gegenrichtung an der Grundplatte 71 des Schalters 7.

## Patentansprüche

1. Schalter mit funkengeschützter Lastumschaltung, insbesondere Drehzahlumschalter für einen gleichstromgespeisten Lüftermotor z.B. in einem Kraftfahrzeug, mit zumindest einer auf einer mit der Last (Motorwicklungen W1-W4) verbundenen Kontaktbahn (21,22 bzw. 31,32 bzw. 41,42 bzw. 51,52) schleifenden Kontaktbürstenanordnung (Kontaktbürstenarm 1) und einer Vorrichtung zum Funkenschutz der betriebsmäßig stromführenden Kontaktstellen (Kontaktbahnsegmente 2 bzw. 3 bzw. 4 bzw. 5) bei Kontaktunterbrechung zwischen der Kontaktbahn und der Kontaktbürstenanordnung, **gekennzeichnet** durch jeweils eine je Kontaktstelle (Kontaktbahnsegmente 2 bzw.3 bzw.4 bzw.5) erste Betriebskontaktbahn (21 bzw.31 bzw.41 bzw.51) und jeweils einer damit leitend verbundenen, in Schleifrichtung der Kontaktbürstenanordnung (Kontaktbürstenarm 1) gegenüber der Betriebskontaktbahn (21 bzw.31 bzw.41 bzw.51) derart verlängerten Schaltkontaktbahn (22 bzw.32 bzw.42 bzw.52), daß im Ab- bzw. Zuschaltaugenblick nur noch die jeweilige Schaltkontaktbahn von der Kontaktbürstenanordnung beschliffen ist.

2. Schalter nach Anspruch 1, **gekennzeichnet** durch einen um einen Schalterdrehpunkt rotatorisch bewegbaren Kontaktbürstenarm (1) und je unterbrechbarer Kontaktstelle zumindest eine von diesem beschliffene kreisbogenförmige Schaltkontaktbahn (22 bzw.32 bzw.42 bzw.52) und dazu konzentrische Betriebskontaktbahn (21 bzw.31 bzw.41 bzw.51), deren Kreisbogenlänge zumindest um die Kontaktbreite des Kontaktbürstenarms kürzer ist als die Kreisbogenlänge der entsprechenden Schaltkontaktbahn.

3. Schalter nach Anspruch 1 und/oder 2, dadurch **gekennzeichnet**, daß jeweils je Kontaktbahnsegment (2 bzw.3 bzw.4 bzw.5) je eine Betriebskontaktbahn (21 bzw.31 bzw.41 bzw.51) und je eine Schaltkontaktbahn (22 bzw.32 bzw.42 bzw.52) einstückig zu einer Bauteileinheit zusammengefaßt sind.

4. Schalter nach einem der Ansprüche 1 bis 3, **gekennzeichnet** durch eine zusätzliche, betriebsmäßig und auch während des Schaltvorgangs unterbrechungsfreie, von der Schleifbürstenanordnung beschliffene, an eine die Last versorgende Spannungsspeisequelle (P) angeschlossene Dauer-Betriebskontaktbahn (6).

5. Schalter nach einem der Ansprüche 1 bis 4, **gekennzeichnet** durch eine radial fluchtende Anordnung der Kontakte (11-13) des Kontaktbürstenarms (1). (FIG 1-5)

6. Schalter mit zumindest drei Kontaktstellen zwischen dem Kontaktbürstenarm und den Kontaktbahnen nach einem der Ansprüche 1 bis 5, **gekennzeichnet** durch eine Dreiecksanordnung der Kontakte (11-13) des Kontaktbürstenarms (1). (FIG 6, 7).

7. Schalter nach Anspruch 3, **dadurch gekennzeichnet**, daß die Kontaktbahnsegmente (2 bzw.3 bzw.4 bzw.5) und/oder die unterbrechungsfreie Kontaktbahn (6) als Teile eines einstückigen Stanzbiegeteils mit zur Rückseite des Schalters (7) abgebogenen elektrischen Anschlußfahnen (23 bzw.33 bzw.63) ausgebildet sind.

8. Schalter nach Anspruch 7, **dadurch gekennzeichnet**, daß die zur Rückseite des Schalters abgebogenen Anschlußfahnen als Anschlußstecker für eine Kontaktbuchse, insbesondere eines handelsüblichen Steckers für eine äußere Anschlußleitung, ausgebildet und angeordnet sind.

9. Schalter nach Anspruch 8, **dadurch gekennzeichnet**, daß die abgebogenen Anschlußfahnen gleichzeitig als Fixiermittel (z.B. Rastlappen 64) zur Halterung der Kontaktsegmente und/oder der unterbrechungsfreien Kontaktbahn (6) in dem Schalter (7) ausgebildet sind.

10. Schalter nach Anspruch 2, **dadurch gekennzeichnet**, daß der Kontaktbürstenarm (1) im bei der Schalterbetätigung drehbaren Teil (72) des Schalters (7) isoliert (Tasche 73) und unter Kontaktfederdruck (Andruckfeder 8) geführt gehalten ist (FIG. 7).

## Claims

1. Switch having spark-protected load switching, in particular rotary speed switch for a direct-current ventilator motor, for example in a motor vehicle, having at least one contact brush arrangement (contact brush arm 1) which slides on a contact track (21, 22 or 31, 32 or 41, 42 or 51, 52) connected to the load (motor windings W1-W4), and a device for spark protection of the operationally current-carrying contact points (contact-track segments 2 or 3 or 4 or 5) in the event of contact interruption between the contact track and the contact brush arrangement, characterized by, in each case, a first operational contact track (21 or 31 or 41 or 51) for each contact point (contact-track segments 2 or 3 or 4 or 5) and, in each case, a switching contact track (22 or 32 or 42 or 52) electrically connected to the first operational contact track (21 or 31 or 41 or 51) and extended in the wiping direction of the contact brush arrangement (contact brush arm 1) with respect to the operational contact track (21 or 31 or 41 or 51) in such a way that, at the instant of disconnection or connection, only the respective switching contact track is wiped by the contact brush arrangement.

2. Switch according to Claim 1, characterized by a contact brush arm (1) which is rotatably movable around a switch pivot and, for each interruptible contact point, at least one arc-shaped switching contact track (22 or 32 or 42 or 52) wiped by said contact brush arm (1) and an operational contact track (21 or 31 or 41 or 51) which is concentric therewith and whose circular-arc length is shorter at least by the contact width of the contact brush arm than the circular-arc length of the corresponding switching contact track.

3. Switch according to Claim 1 and/or 2, characterized in that, for each contact segment (2 or 3 or 4 or 5), one operational contact track (21 or 31 or 41 or 51) in each case and one switching contact track (22 or 32 or 42 or 52) in each case are in every case integrally combined to form a component unit.

4. Switch according to one of Claims 1 to 3, characterized by an additional continuous-operation contact track (6) which is free of interruption during operation and also during the switching operation, which is wiped by the wiper brush arrangement and which is connected to a voltage supply source (P) which supplies the load.

5. Switch according to one of Claims 1 to 4, characterized by a radially aligned arrangement of the contacts (11-13) of the contact brush arm (1). (Figures 1-5).

6. Switch having at least three contact points between the contact brush arm and the contact tracks according to one of Claims 1 to 5, characterized by a triangular arrangement of the contacts (11-13) of the contact brush arm (1). (Figures 6, 7).

7. Switch according to Claim 3, characterized in that the contact track segments (2 or 3 or 4 or 5) and/or the interruption-free contact track (6) are designed as part of an integral punched and bent part having electrical contact lugs (23 or 33 or 63) bent towards the rear of the switch (7).

8. Switch according to Claim 7, characterized in that the connecting lugs bent towards the rear of the switch are designed and disposed as connecting plugs for a contact socket, in particular a commercial plug for an external connecting lead.

9. Switch according to Claim 8, characterized in that the bent connecting lugs are simultaneously designed as fixing means (for example, latching tabs 64) for retaining the contact segments and/or the interruption-free contact track (6) in the switch (7).

10. Switch according to Claim 2, characterized in that the contact brush arm (1) is mounted in an insulating manner (pocket 73) in that part (72) of the switch (7) which can be rotated during switch actuation and is kept under contact-spring pressure (contact spring 8) (Figure 7).

## Revendications

1. Commutateur pour une commutation en charge protégée contre les étincelles, notamment commutateur de vitesse de rotation pour un moteur de ventilateur alimenté par un courant continu, par exemple dans un véhicule automobile, comportant au moins un dispositif de balais de contact (bras 1 de support de balais de contact), qui glissent sur une piste de contact (21, 22, 31 ou 32 ou 41, 42 ou 51, 52), qui est reliée à la charge (enroulements W1 - W4) du moteur, et un dispositif pour protéger contre les étincelles les plots de contact (segments 2 ou 3 ou 4 ou 5) de la piste de contact), qui véhiculent un courant pendant le fonctionnement, lors de l'interruption du contact entre la piste de contact et le dispositif de balais de contact, caractérisé par respectivement une première piste de contact de service (21 ou 31 ou 41 ou 51), prévue pour chaque point de contact (segments 2 ou 3 ou 4 ou 5 de la tige de contact), et respectivement une piste de contact de commutation (22 ou 32 ou 42 ou 52), qui est reliée d'une manière électriquement conductrice à la piste de contact de service et qui est prolongée dans le sens de bouclage du dispositif de balais de contact (bras 1 de support des balais de contact) par rapport à la piste de contact de service (21 ou 31 ou 41 ou 51) de telle sorte, qu'au moment de la coupure ou de la fermeture, le dispositif de balais de contact glisse encore seulement sur la piste respective de contact de commutation.

2. Commutateur selon la revendication 1, caractérisé par un bras (1) portant les balais de contact, qui est déplaçable en rotation autour d'un centre de rotation du commutateur, et, pour chaque point de contact pouvant être interrompu, au moins une piste de contact de commutation (22 ou 32 ou 42 ou 52) en forme d'arc de cercle, sur laquelle glisse ce bras, et une piste de contact de service (21 ou 31 ou 41 ou 51) concentrique à la piste de contact précédente et dont la longueur de l'arc de cercle est inférieure, au moins de la largeur du contact du bras portant les balais de contact, à la longueur de l'arc de cercle de la piste de contact de commutation correspondante.

3. Commutateur selon la revendication 1 et/ou 2, caractérisé par le fait que respectivement pour chaque segment (2 ou 3 ou 4 ou 5) de la piste de contact, respectivement une piste de contact de service (21 ou 31 ou 41 ou 51 ) et respectivement une voie de contact de commutation (22 ou 32 ou 42 ou 52) sont réunies d'un seul tenant pour former une unité de construction.

4. Commutateur selon les revendications 1 à 3, caractérisé par une piste complémentaire de contact de service permanent (6), non interrompue en fonctionnement et également pendant l'opération de commutation et sur laquelle glisse le dispositif de balais glissants et qui est raccordée à une source d'alimentation en tension (P) qui alimente la charge.

5. Commutateur selon l'une des revendications 1 à 4, caractérisé par une disposition alignée radialement des contacts (11-13) du bras (1) portant les balais de contact. (Figures 1-5).

6. Commutateur comportant au moins trois zones de contact entre le bras de support des balais de contact et les pistes de contact selon l'une des revendications 1 à 5, caractérisé par une disposition en triangle des contacts (11-13) du bras (1) de support des balais de contact. (Figures 6, 7).

7. Commutateur selon la revendication 3, caractérisé par le fait que les segments (2 ou 3 ou 4 ou 5) de la piste de contact et/ou la piste de contact ininterrompue (6) sont réalisés sous la forme d'éléments d'une pièce monobloc découpée et pliée comportant des languettes de raccordement électrique (23 ou 33 ou 63), qui sont repliées vers le côté arrière du commutateur (7).

8. Commutateur selon la revendication 7, caractérisé par le fait que les languettes de raccordement repliées vers le côté arrière du commutateur, sont agencées et disposées sous la forme de connecteurs de raccordement pour une douille de contact, notamment d'un connecteur usuel dans le commerce pour une ligne de raccordement extérieure.

9. Commutateur selon la revendication 8, caractérisé par le fait que les languettes de raccordement repliées sont réalisées simultanément sous la forme d'éléments de fixation (par exemple des pattes d'encliquetage 64) servant à retenir les segments de contact et/ou la voie de contact ininterrompue (6) dans le commutateur (7).

10. Commutateur selon la revendication 2, caractérisé par le fait que le bras (1) de support des balais de contact est retenu dans un état isolé (poche 73) dans la partie (72) du commutateur (7), qui peut tourner lors de l'actionnement du commutateur, et en étant guidé sous la pression du ressort de contact (ressort de pression 8). (Figure 7).
